# DEMANDE DE BREVET EUROPEEN

(11) **EP 2 466 102 A1**
(43) Date de publication de la demande: **20.06.2012**
(21) Numéro de dépôt: 10195568.0
(22) Date de dépôt: 17.12.2010
(51) Int. Cl.: F02M 25/07, B01F 5/00

(54) **Dispositif de traitement d'un mélange gaz d'échappement/eau préalablement à son injection dans un moteur thermique et véhicule équipé d'un tel dispositif**

(71) Demandeur: Ecopra, 43160 La Chaise Dieu (FR)
(72) Inventeur: Chausse, Christophe, 63220, DORE L'EGLISE (FR)
(74) Mandataire: Myon, Gérard Jean-Pierre

(57) **Abrégé**

Ce dispositif (1) de traitement d'un mélange comprenant de l'eau et une partie des gaz d'échappement issus de la combustion dans un moteur à combustion interne, préalablement à l'injection du mélange dans le circuit d'admission du moteur, comprend un organe de collecte (2) d'une partie des gaz d'échappement et un réservoir d'eau (10). Il comprend également au moins une chambre (16) de mélange d'une partie des gaz d'échappement et de l'eau, reliée (18) au moins au dispositif (20) d'admission en comburant du moteur, cette chambre (16) étant configurée en S et pourvue d'un organe d'homogénéisation du mélange.

## Description

L'invention a trait à un dispositif de traitement d'un mélange gaz d'échappement/eau préalablement à son injection dans un moteur thermique. Elle concerne également un véhicule équipé d'un tel dispositif.

Ce dispositif est utilisable avec tout type de moteur thermique, également dénommé moteur à combustion interne.

Un moteur à combustion interne utilise la réaction d'un carburant et d'un comburant, généralement l'oxygène de l'air, pour transformer l'énergie thermique produite par la réaction de combustion en un travail mécanique. Par carburant, on désigne ici un carburant dérivé de produits pétroliers, par exemple de l'essence, de l'essence sans plomb, du gasoil ou un carburant appartenant à la catégorie des bio-carburants, par exemple une huile végétale ou un alcool.

Dans les moteurs à combustion interne, l'énergie thermique est fournie par la combustion d'un carburant sous forme liquide en présence d'un comburant gazeux, l'oxygène de l'air. Le gaz issu de cette combustion est utilisé, lors d'une phase d'expansion, pour mettre en mouvement des pièces mécaniques situées, par exemple, dans un véhicule, une pompe, un compresseur ou dans d'autres appareils produisant un mouvement.

Les produits, sous forme gazeuse, issus de la combustion sont rejetés à l'extérieur du moteur. Du fait des normes anti-pollution en vigueur et de la raréfaction des produits pétroliers, il est intéressant de limiter les rejets gazeux issus de la combustion dans de tels moteurs tout en améliorant le rendement de la combustion et la consommation en carburant de ces moteurs.

Avec une combustion améliorée, donc plus complète, on obtient moins de particules imbrûlées, potentiellement polluantes, dans les gaz d'échappement en sortie du moteur tout en ayant, à puissance égale fournie par le moteur, une consommation moindre en carburant. En effet, il est admis que, dans les gaz d'échappement, la proportion de carburant non brûlé est généralement comprise entre 0,2% et 2% du volume de carburant injecté dans le moteur.

Par ailleurs, une partie de l'énergie thermique dégagée lors de la combustion est utilisée pour amener en température le carburant et le comburant. Avec une combustion plus complète, on optimise le rendement du moteur.

Pour cela, il est connu de faire circuler dans le moteur, au moins partiellement, les gaz d'échappement en les redirigeant vers le système d'admission en air du moteur. Cette partie des gaz d'échappement, également connus sous le nom de « gaz RGE », se mélange ainsi à l'air extérieur entrant dans le moteur au niveau de l'admission, ce qui assure une combustion de certaines des particules imbrûlées présentes dans les gaz d'échappement. On améliore ainsi le rendement de combustion interne du moteur, la consommation en carburant et on diminue la pollution émise par le moteur.

Il est également connu d'injecter dans le mélange air et gaz d'échappement de l'eau. On abaisse ainsi la température de combustion du mélange carburant/comburant et on limite l'émission de certains polluants, notamment les NOx ou oxydes d'azote tels que le NO (oxyde d'azote) ou le NO2 (dioxyde d'azote). Ces polluants se combinent à l'eau pour former certains composés, tel l'acide nitrique.

L'apport d'eau, en diminuant la température de combustion, préserve les composants du moteur, en évitant une surchauffe de ce dernier, tout en limitant les besoins en énergie thermique nécessaire pour amener à température de combustion le mélange carburant/comburant.

FR-A-2 895 461 décrit un dispositif permettant à la fois la recirculation des gaz d'échappement et l'injection d'eau dans le circuit d'admission d'air d'un moteur. Dans ce dispositif, les conduites de recirculation des gaz et d'eau sont concentriques, plusieurs conduits d'eau étant insérés dans une conduite de gaz. Le prélèvement des gaz de combustion s'effectue sur l'échappement, par exemple par l'intermédiaire d'une vanne. L'eau et le gaz mélangés sont réinjectés au niveau du dispositif d'admission d'air du moteur.

FR-A-2 926 606 décrit également un dispositif où les gaz d'échappement sont mélangés à de l'eau préalablement à leur injection dans le circuit d'admission du moteur. Ce dispositif comporte des moyens d'émission de champs électromagnétiques agissant sur le mélange gaz/eau, préalablement à son admission dans le moteur.

Ces dispositifs sont encombrants et ne peuvent pas être aisément montés sur tout type de moteur. Par ailleurs ces dispositifs n'assurent pas une homogénéisation optimale du mélange eau et gaz d'échappement avant son injection dans le circuit d'admission du moteur.

L'invention propose un autre dispositif de traitement d'un mélange eau/gaz d'échappement, aisé à mettre en oeuvre, assurant un mélange optimal de l'eau et des gaz d'échappement et adaptable à divers types de moteur.

A cet effet, l'invention a pour objet un dispositif de traitement d'un mélange comprenant de l'eau et une partie des gaz d'échappement issus de la combustion dans un moteur à combustion interne, préalablement à l'injection du mélange dans le circuit d'admission du moteur, comprenant :
- un organe de collecte d'une partie des gaz d'échappement,
- un réservoir d'eau,
   caractérisé en ce qu'il comprend au moins une chambre de mélange d'une partie des gaz d'échappement et de l'eau, reliée au moins au dispositif d'admission en comburant du moteur, cette chambre étant configurée en S et pourvue d'un organe d'homogénéisation du mélange.

Ces éléments permettent un positionnement aisé selon la place disponible au niveau du moteur, tout en facilitant la maintenance et le changement de ces différents organes.

Selon des aspects avantageux mais non obligatoires de l'invention, le dispositif peut incorporer une ou plusieurs des caractéristiques suivantes :
- La chambre est pourvue d'un évent propre à équilibrer la pression dans la chambre.
- L'organe d'homogénéisation comprend une grille.
- L'organe d'homogénéisation comprend un réseau de fils.
- L'organe d'homogénéisation est en un matériau ferromagnétique alors que la chambre dans laquelle il est inséré est en un matériau amagnétique.
- la chambre est équipée d'un vase d'expansion adapté pour assurer en permanence une même proportion en eau dans le mélange gaz d'échappement et eau.
- Le dispositif comprend une autre chambre de mélange d'une partie des gaz d'échappement et de l'eau, reliée à la première chambre et dépourvue d'organe d'homogénéisation, cette autre chambre étant reliée à l'organe de collecte, au réservoir d'eau et équipée d'un vase d'expansion.

L'invention concerne également un véhicule équipé d'un dispositif conforme à l'une des caractéristiques précédentes.

L'invention sera mieux comprise et d'autres avantages de celle-ci apparaîtront plus clairement à la lecture de la description qui va suivre de deux modes de réalisation d'un dispositif conformes à l'invention, donnée uniquement à titre d'exemple et faite en se référant aux dessins annexés dans lesquels :
- la figure 1 est une vue, en perspective, des éléments constitutifs d'un dispositif conforme à un premier mode de réalisation de l'invention, des organes de liaison entre des éléments et certains éléments étant schématiquement représentés,
- la figure 2 est une vue de dessus, à une autre échelle, d'un élément constitutif du dispositif illustré à la figure 1,
- la figure 3 est une vue de côté à la même échelle, de l'élément de la figure 2,

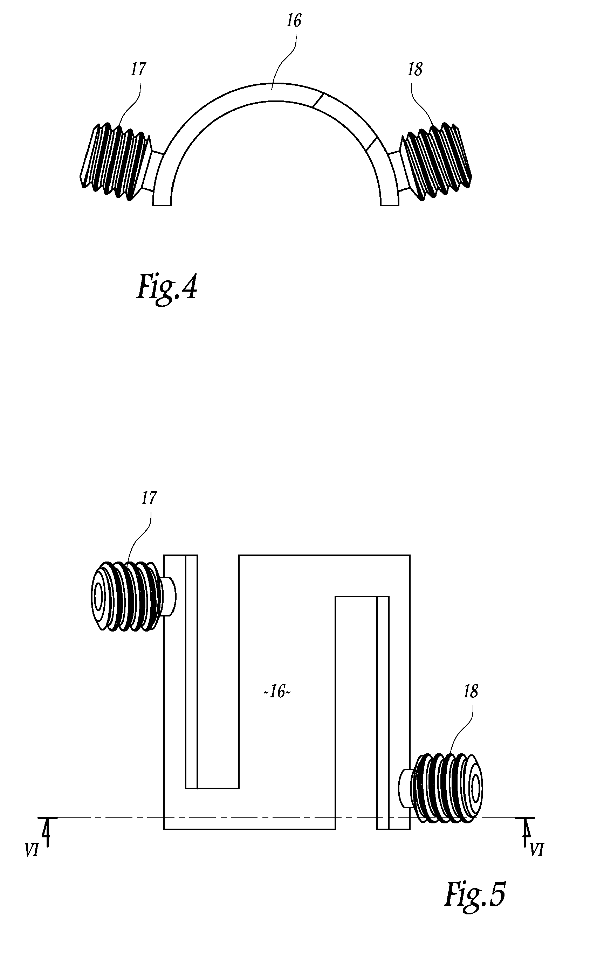

- les figures 4 et 5 sont des vues respectivement de côté et de dessus d'un autre élément constitutif du dispositif, à plus grande échelle,
- la figure 6 est une coupe selon la ligne VI-VI à la figure 5 et
- les figures 7 et 8 sont des vues, respectivement, en perspective et de côté, d'un dispositif conforme à un second mode de réalisation, la figure 7 illustrant un élément de ce dispositif et la figure 8 deux éléments.

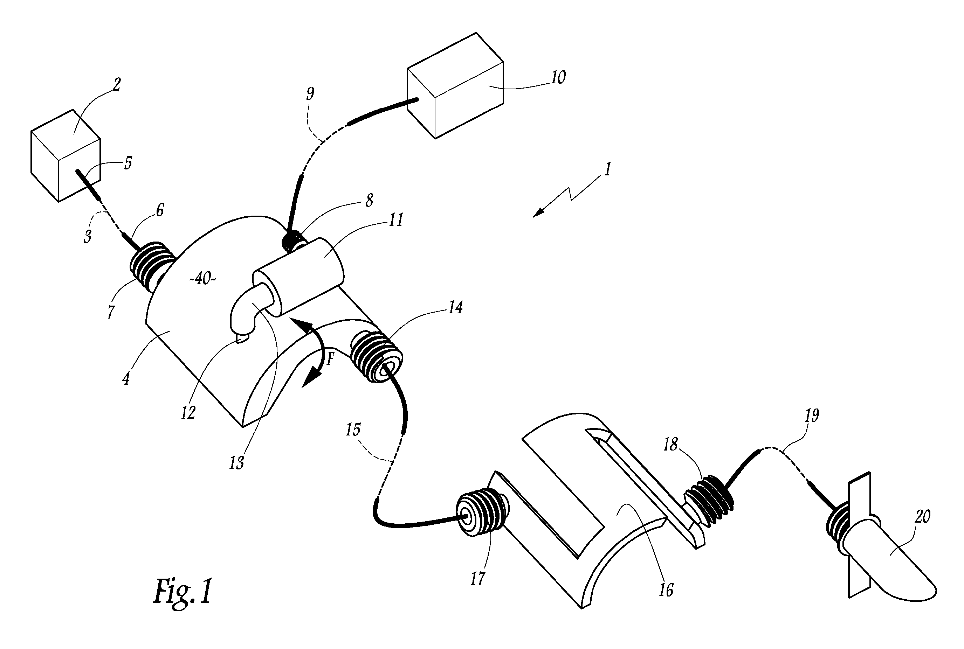

Le dispositif 1 représenté à la figure 1 comprend un premier organe 2 de collecte des gaz d'échappement. Cet organe 2, schématiquement illustré, a une forme et des dimensions adaptées à la sortie d'un conduit, non représenté, des gaz d'échappement d'un moteur à combustion interne, par exemple un moteur équipant un véhicule automoteur. Par véhicule automoteur on désigne ici aussi bien une voiture qu'un camion, une moto, un scooter, un engin agricole ou un engin de chantier.

Avantageusement, l'organe 2 est réalisé en un matériau métallique inaltérable, par exemple en acier inoxydable. Il est adapté pour être inséré dans le conduit de sortie des gaz d'échappement, cela sans perforation du conduit de sortie des gaz d'échappement et sans gêner la sortie des gaz. Pour cela, l'organe 2 est avantageusement inséré dans l'embouchure du conduit. Le maintien d'un tel organe en position dans le conduit de sortie des gaz d'échappement est réalisé par des moyens connus en soi, par exemple avec des colliers, permettant d'éviter toute vibration du dispositif et /ou du conduit des gaz d'échappement. L'organe 2 est, par exemple, une canule.

L'organe 2 permet de prélever une partie des gaz d'échappement sans nuire à leur évacuation. La quantité de gaz prélevé est fonction de la quantité de gaz d'échappement émise, c'est-à-dire du travail fourni par le moteur. L'organe 2 est, dans ce mode de réalisation, relié par un tuyau 3, schématiquement illustré à la figure 1, à une première chambre de mélange 4, indépendante et distante de l'organe 2. Le tuyau 3 est réalisé dans un matériau insensible aux conditions environnementales et résistant à la chaleur. Il s'agit, par exemple, d'un tuyau 3 métallique, souple ou rigide, en acier inoxydable, dont les dimensions et l'encombrement sont adaptés aux conditions de montage du dispositif au voisinage du moteur.

Une extrémité 5 du tuyau 3 est fixée à la sortie de l'organe 2 et l'autre extrémité 6 est fixée sur la première chambre 4, au niveau d'une conduite d'admission des gaz 7 dans cette dernière. Avantageusement, le montage du tuyau 3 est effectué de manière amovible, par exemple par des bagues filetées, sur la conduite 7 et sur la sortie de la canule 2.

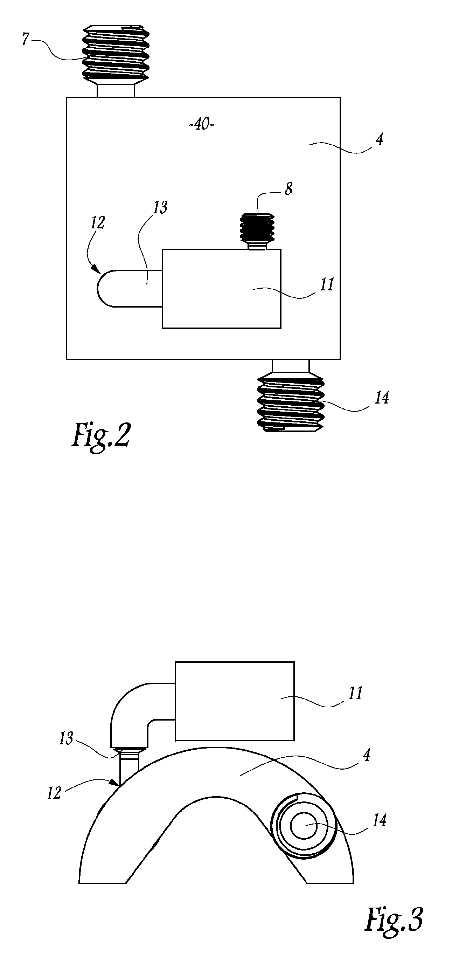

La première chambre de mélange 4 est une pièce allongée, de faible épaisseur par rapport à sa plus grande dimension, cintrée, à section transversale en arc de cercle. Comme illustré aux figures 1 à 3, cette chambre 4 comprend également une arrivée d'eau 8 pourvue d'un vase d'expansion 11, en l'espèce de forme cylindrique à base circulaire. Cette arrivée d'eau 8 est reliée par un tuyau 9, par exemple souple, à un réservoir d'eau 10 distant et indépendant de la chambre 4 et de l'organe 2. La contenance du réservoir 10 est généralement comprise entre 0,51 et 51 et il est situé au dessus de cette chambre 4, de manière à assurer l'alimentation en eau de cette dernière par gravité. Avantageusement, dans le cas d'un montage du dispositif sur une voiture, le réservoir 10 est fixé dans le coffre de celle-ci.

L'arrivée d'eau 8 est solidaire du vase d'expansion 11, lui-même relié à une entrée 12 de la chambre 4. Le vase d'expansion 11 permet de réguler le débit d'entrée de l'eau dans la chambre 4. Ainsi, on assure une même proportion en eau dans le mélange gaz d'échappement/eau, quelle que soit la quantité d'eau restante dans le réservoir 10.

Il est à noter que la quantité d'eau injectée dans la chambre 4 est relativement faible puisqu'elle représente environ de 2% à 7% de la consommation en carburant pour 100km, soit, pour une consommation de 5L/100km, 100ml à 350 ml d'eau utilisée pour 100km parcourus.

Le vase d'expansion 11 est équipé d'un évent, non représenté, permettant d'équilibrer la pression dans la chambre 4 en fonction de l'écoulement en gaz d'échappement. Le vase 11 a un niveau d'eau constant par rapport au niveau du mélange eau et gaz d'échappement présent dans la chambre 4.

Pour cela, l'arrivée d'eau 8, la sortie d'eau 13 et le vase d'expansion 11, reliée à l'entrée 12 de la chambre 4, ont des diamètres et un volume adaptés. En d'autres termes, le vase 11 forme une réserve d'eau tampon entre le réservoir 10 et la chambre 4. Un tel moyen de régulation du débit d'eau injectée dans la chambre 4 est plus aisé à mettre en oeuvre qu'un dispositif de type goutte à goutte puisqu'il n'est pas nécessaire de le fermer lorsque le moteur ne fonctionne pas.

Avantageusement, la liaison entre le vase 11 et la chambre 4 est orientable, par exemple d'un angle de +/- 15°, par rapport à un axe longitudinal de l'entrée 12. Ceci permet d'orienter aisément le vase 11 par rapport à la chambre 4, afin d'adapter le montage du dispositif à la place disponible au voisinage du pot d'échappement. En d'autres termes on peut faire pivoter plus ou moins le vase 11 selon la double flèche F, en fonction de la position de la chambre 4, celle-ci étant positionnée au niveau du moteur de sorte qu'un axe principal, non représenté, du corps principal 40 de la chambre 4 soit plus ou moins en position verticale.

A l'opposé de la conduite d'admission des gaz 7, la première chambre 4 est équipée d'une conduite de sortie 14, avantageusement de même type que la conduite d'admission 7, c'est-à-dire équipée d'une bague filetée. Cette sortie 14 permet de relier, par un tuyau 15, souple ou rigide, la première chambre 4 à une seconde chambre de mélange 16.

Cette seconde chambre 16 est, avantageusement, positionnée près du circuit d'admission d'air, non représenté, du moteur. Elle est, dans ce premier mode de réalisation, indépendante et éloignée de la première chambre 4.

En variante, la chambre 16 est située à proximité de la chambre 4, le tuyau 15 étant alors d'une longueur minimale. Dans un autre mode de réalisation, les chambres 4 et 16 sont monoblocs tout en étant indépendantes. La distance entre les deux chambres 4, 16 est fonction des conditions de montage du dispositif et de la place disponible au voisinage du moteur.

La chambre 16 est également distante de l'organe 2 et du réservoir 10.

La seconde chambre 16 a pour fonction d'assurer un brassage optimal du mélange des gaz d'échappement et de l'eau réalisé, en amont de l'entrée 17, dans la première chambre 4. En d'autres termes, on émulsionne ce mélange avant son injection dans le moteur. Cette chambre 16 est également adaptée pour permettre la filtration de certaines des particules imbrûlées présentes dans le mélange gaz d'échappement et eau. Seules les particules les plus fines peuvent passer dans le circuit d'admission d'air du moteur en vue de leur combustion.

Le brassage permet d'homogénéiser le mélange avant son admission dans le moteur. Pour assurer ce brassage, la seconde chambre 16 est cintrée et elle a une forme globale en S.

Comme pour la chambre 4, une telle forme cintrée permet de positionner au plus près les chambres 4 et 16 contre un élément tubulaire situé au voisinage du moteur, afin de faciliter la fixation du dispositif tout en minimisant l'encombrement de l'ensemble du dispositif. Un tel élément est, par exemple, le tuyau d'échappement. La fixation de la chambre 16 est facilitée par une certaine flexibilité due à sa faible épaisseur, généralement comprise entre 3 mm et 6 mm, et à sa forme.

La seconde chambre 16 est configurée, par sa forme en S, de manière à définir un parcours en zig zag du mélange eau et gaz d'échappement à l'intérieur de la chambre 16, entre l'entrée et la sortie de la chambre 16. Pour cela, une extrémité libre du S constitutif de la chambre 16 est équipée d'une conduite 17 d'admission du mélange. L'extrémité libre opposée est pourvue d'une conduite 18 de sortie du mélange 18, ces conduites 17, 18 sont similaires aux autres conduites, c'est-à-dire qu'elles comportent une bague filetée.

La conduite 17 est reliée, via le tuyau 15, à la conduite 14 de la chambre 4. La conduite 18 est reliée, via un tuyau 19, similaire au tuyau 15, à un organe d'injection 20 du mélange dans un circuit d'admission d'air d'un moteur, non illustré.

En variante, l'admission du mélange est effectuée directement dans le carburateur, à la tête de culasse du moteur ou au niveau du filtre à air du moteur.

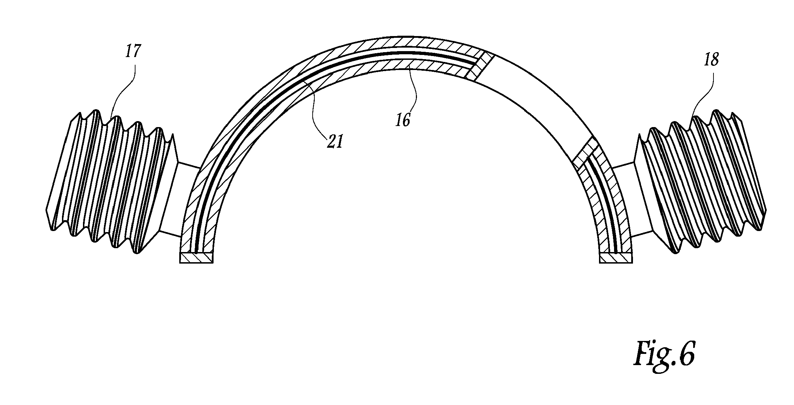

Comme illustrée à la figure 6, un organe d'homogénéisation 21 est inséré, en position centrale, dans la chambre 16. Cet organe 21 est présent dans tout le volume de la chambre 16, de sorte qu'il assure une homogénéisation du mélange sur la totalité du parcours de ce dernier entre l'entrée 17 et la sortie 18 de la chambre 16. Cet organe est, par exemple, une grille 21 à mailles fines ou un réseau de fils. L'organe 21 est réalisé en un matériau ferromagnétique, par exemple en acier, alors que la chambre 16 est réalisée en un matériau amagnétique, par exemple en acier inoxydable.

Cet organe d'homogénéisation 21 est également un organe de filtration du mélange.

Ainsi, on réalise un écoulement turbulent et une émulsion du mélange gaz et eau, dû à la configuration de la chambre 16 et à la présence, dans la chambre 16, d'un obstacle, à savoir l'organe 21. On assure également une filtration du mélange en retenant certaines particules, selon leurs tailles, sur ce même organe 21, que ce dernier soit une grille ou un réseau de fils.

Par ailleurs, la présence d'un champ magnétique dû à la différence de nature entre le métal constitutif de la chambre 16 et le métal constitutif de l'organe 21 influe sur l'orientation des constituants du mélange lors de leur passage dans la chambre 16.

Par la présence d'un champ magnétique, on limite le risque que des particules se collent sur les parois de la chambre 16, ce qui pourrait entraîner une diminution du volume utile de la chambre, voire un colmatage de celle-ci.

La chambre 16 assure ainsi un brassage homogène du mélange gaz d'échappement/eau et son « nettoyage » en limitant la quantité de particules envoyées dans le circuit d'admission et risquant de nuire au fonctionnement du moteur.

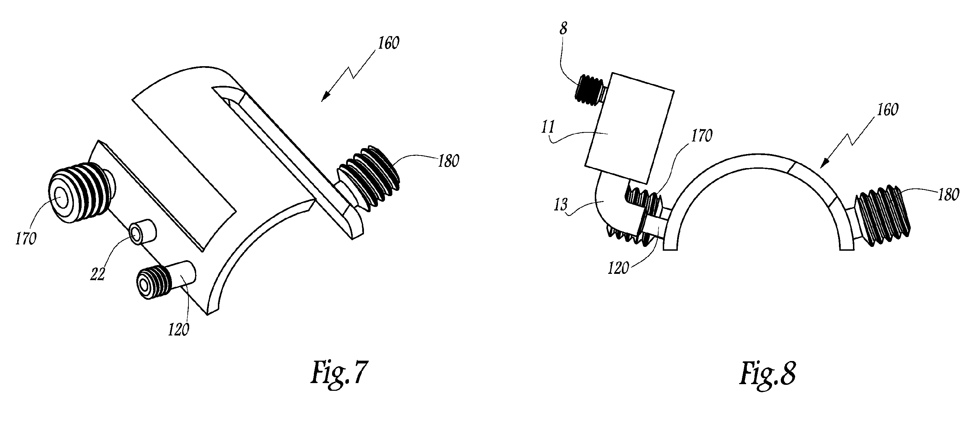

Dans un autre mode de réalisation illustré aux figures 7 et 8, une chambre 160 est pourvue d'un évent 22, permettant d'équilibrer la pression dans la chambre 160, quel que soit le débit du mélange passant dans la chambre 160. Cette chambre 160 est également équipée d'un embout fileté 120. Cet embout 120 permet la fixation de la sortie d'eau 13 du vase d'expansion 11. L'embout 120 permet d'orienter plus ou moins le vase 11 par rapport à un axe longitudinal de l'embout 120, de manière similaire à la fixation du vase 11 sur la chambre 4.

Dans ce mode de réalisation, la chambre 160 est pourvue d'une conduite filetée 170 propre à être reliée à l'organe de collecte 2 et d'une conduite filetée 180 destinée à relier la chambre 160 au circuit d'admission du moteur.

Ainsi, la chambre 160 assure la mise en mélange des gaz d'échappement et de l'eau ainsi que le brasage et l'émulsion du mélange, préalablement à son injection dans le moteur.

En d'autres termes, dans ce mode de réalisation, la chambre 160 remplace les chambres 4 et 16, ce qui permet de réduire l'encombrement du dispositif tout en facilitant son montage. La chambre 160 est ainsi aisément adaptable sur un véhicule et peut, en seconde monte, remplacer, dans un dispositif déjà monté, les chambres 4 et 16.

Un tel dispositif est relativement simple à mettre en oeuvre et le montage est aisé sur tout type de moteur, en particulier lorsque ceux ci équipent un véhicule, puisqu'il ne nécessite pas de transformation particulière du véhicule.

Le dispositif est monté à l'extérieur du véhicule, son encombrement est minimal et il est fixé de manière amovible sur le véhicule, par exemple sur le tuyau d'échappement, ce qui facilite son changement et/ou son entretien.

Par ailleurs, les éléments du dispositif peuvent être positionnés selon des angles différents, l'alimentation étant optimale quelle que soit la position des différentes chambres par rapport à l'horizontale.

En variante, il est possible de monter plusieurs chambres en série. Par exemple un tel montage peut comprendre une chambre 4, ou une chambre 160, reliée à au moins une chambre 16.

En variante, les chambres 16 et 160 sont de plus grandes dimensions que celles décrites, par exemple elles sont formées d'au moins deux S aboutés, ce qui induit un parcours en zig zag plus long.

## Revendications

1. Dispositif (1) de traitement d'un mélange comprenant de l'eau et une partie des gaz d'échappement issus de la combustion dans un moteur à combustion interne, préalablement à l'injection du mélange dans le circuit d'admission du moteur, comprenant :
- un organe de collecte (2) d'une partie des gaz d'échappement,
- un réservoir d'eau (10),
**caractérisé en ce qu'**il comprend au moins une chambre (16 ; 160) de mélange d'une partie des gaz d'échappement et de l'eau, reliée (18 ; 180) au moins au dispositif (20) d'admission en comburant du moteur, cette chambre (16 ; 160) étant configurée en S et pourvue d'un organe d'homogénéisation (21) du mélange.

2. Dispositif selon la revendication 1, **caractérisé en ce que** la chambre (160) est pourvue d'un évent (22) propre à équilibrer la pression dans la chambre (160).

3. Dispositif selon l'une des revendications précédentes, **caractérisé en ce que** l'organe d'homogénéisation comprend une grille (21).

4. Dispositif selon l'une des revendications 1 à 2, **caractérisé en ce que** l'organe d'homogénéisation (21) comprend un réseau de fils.

5. Dispositif selon l'une des revendications 3 ou 4, **caractérisé en ce que** l'organe d'homogénéisation (21) est en un matériau ferromagnétique alors que la chambre (16 ; 160) dans laquelle il est inséré est en un matériau amagnétique.

6. Dispositif selon l'une des revendications précédentes, **caractérisé en ce que** la chambre (160) est équipée d'un vase d'expansion (11) adapté pour assurer en permanence une même proportion en eau dans le mélange gaz d'échappement et eau.

7. Dispositif selon la revendication 1, **caractérisé en ce qu'**il comprend une autre chambre (4) de mélange d'une partie des gaz d'échappement et de l'eau, reliée à la première chambre (16) et dépourvue d'organe d'homogénéisation (21), cette autre chambre (4) étant reliée à l'organe de collecte, au réservoir d'eau et équipée d'un vase d'expansion (11).

8. Véhicule équipé d'un dispositif conforme à l'une des revendications précédentes.
